# EUROPEAN PATENT APPLICATION

(11) **EP 1 795 327 A1**
(43) Date of publication of application: **13.06.2007**
(21) Application number: 06024810.1
(22) Date of filing: 30.11.2006
(51) Int. Cl.: B29C 47/10, C08K 3/00, C08K 3/34, C08K 7/14, C08L 23/10

(54) **Self-extinguishing thermoplastic compound, and process of preparing same**

(30) Priority: 06.12.2005 IT VI20050323
(71) Applicant: SACME S.p.A., 36034 Molina di Malo VI (IT)
(72) Inventor: Modesti, Michele, 35127 Padova (IT)
(74) Representative: Vannini, Mario

(57) **Abstract**

A self-extinguishing thermoplastic compound comprising at least one base polymer, at least one flame-retardant agent, at least one reinforcing component and a nanofiller is disclosed. A process for preparing such compound, comprising the steps of providing at least one base polymer, at least one flame-retardant agent, at least one reinforcing component and a nanofiller, dispersing the nanofiller in the base polymer, adding the reinforcing component, adding the flame-retardant agent is disclosed as well.

## Description

### Field of the invention

The present invention is generally applicable to polymeric materials, and particularly relates to a self-extinguishing thermoplastic compound, which may be specifically used to make polymeric articles susceptible to high fire risk, such as components and accessories for electric cables, transformer cabins, and electric equipment in general.

The invention further relates to a process for preparing the above compound.

### Background of the invention

A variety of polymeric materials are known to be currently used for a number of different applications. For instance, polymeric materials are largely preferred in residential and industrial construction, as well as transportation, as compared with metal materials, due to their low cost, light weight and versatility.

On the other hand, these materials largely facilitate ignition and propagation of fires, due to their being directly derived from petroleum and to their particular chemical structure. When exposed to flame, polymers generally act as fuels, due to their low autoignition temperature, their high flame temperature and their high heat of combustion.

Use of polymeric materials in fire hazard applications is subject to national and international standards whose severity is related to the field of use and to the required fire resistance. Hence, various polymer solutions have been developed to meet such standards.

Particularly in the field of electric components and equipment, which is regulated by very stringent standards, thermoset polymers are typically used, due to their good flame resistance properties.

One drawback of this type of polymers, is their high processing cost as compared with thermoplastic polymers, as well as their high specific weight and low availability. Therefore, research in the field has increasingly focused on the development of thermoplastic polymers providing high fire resistance.

One known fire-resistant thermoplastic polymer is a polypropylene having a V0 classification under the UL94 standard on flame-retardant polymers. This compound, which is obtained by adding halogenated or non halogenated flame-retardant agents to the polypropylene, has good flame resistance properties, but not to the level required to meet the strictest standards.

Particularly, this V0 polypropylene cannot meet the DS4974 test specification developed by the Technical Committee of ENEL (Ente Nazionale Energia Elettrica), which imposes highly stringent restrictions to resins for electrical use. No thermoplastic compound has been able to pass this kind of test heretofore.

Therefore, the need has been long felt for a thermoplastic compound having very high fire resistance, similar to thermoset compounds, and to such a level as to meet the most stringent and restrictive standards.

### Summary of the invention

The object of this invention is to overcome the above drawbacks, by providing a self-extinguishing thermoplastic compound that provides high efficiency and resistance as well as a relative cost-effectiveness.

A particular object is to provide a thermoplastic compound having very high fire resistance, similar to thermoset compounds, and to such a level as to meet the most stringent and restrictive standards.

Another object of the invention is to provide a method of preparing a thermoplastic compound that allows to increase the yield while minimizing manufacturing costs.

These and other objects, as better explained hereafter, are fulfilled by a thermoplastic compound which, as defined in claim 1, comprises at least one base polymer, at least one flame-retardant agent, at least one reinforcing component and a nanofiller.

Thanks to this composition, the compound of this invention has very high fire resistance, similar to thermoset compounds, and to such a level as to meet the most stringent and restrictive standards.

As used herein, the term "% by weight" is intended as the percentage dry weight of the relevant component with respect to the total dry weight before processing.

In a preferred, non limiting configuration, the compound of the invention may include about 45% by weight base polymer, such as polypropylene, about 40% by weight flame-retardant agent, about 10% reinforcing component, such as glass fiber, and about 5% nanofiller.

In another aspect of the invention, a polymeric article is provided, as defined in claim 14, which is characterized in that it comprises the thermoplastic compound as described and claimed herein.

In yet another aspect of the invention, a use of the thermoplastic compound is provided, as defined in claim 15.

In a further aspect of the invention, a process is provided for preparing the above compound, as defined in claim 16, which comprises at least the steps of providing at least one base polymer, providing at least one flame-retardant agent, providing at least one reinforcing component, providing a nanofiller, dispersing said nanofiller in said at least one base polymer, adding said at least one reinforcing component, adding said flame-retardant agent.

The above preparation process provides maximized process yield while minimizing manufacturing costs.

As used herein, the term "providing" and derivatives thereof, designates the preparation of a relevant component for a relevant process step, including any preventive treatment designed for optimal performance of such relevant step, from simple collection and possible storage to purification, addition of adjuvants or excipients, and thermal and/or chemical and/or physical pre-treatments or the like.

### Detailed description of a few preferred embodiments

Further features and advantages of the invention will be more apparent from the detailed description of a few preferred, non-exclusive embodiments of the invention, which will be described as non-limiting examples thereof.

In a general configuration, the compound of the invention comprises a base polymer, a flame-retardant agent, a reinforcing component and a nanofiller.

Advantageously, the latter may represent 2% to 20% by weight, and may be of the hectorite or montmorillonite type. Nevertheless, it will be understood that any nanofiller may be used for the purpose, whether of the silicic type or not, whether organomodified or not, which synergistically operates with the flame-retardant agent.

In a preferred, non limiting preferred configuration of the invention, the nanofiller, preferably but without limitation a hectorite nanofiller, may represent about 5% by weight.

Conveniently, the base polymer may include a polyolefin, preferably representing 20% to 80% by weight.

Preferably, the polyolefin will include a polypropylene copolymer or homopolymer or a combination thereof, in various percentages depending on the purpose. Nevertheless, it will be understood that any polyolefin known to the skilled person may be used for the purpose such as, without limitation, EPDM, m-EPDM, m-EP copolymer, EVA, VLDPE, LDPE, elastomer or thermoplastic rubber, MDPE, HDPE, LLDPE, XLPE, XLPP or a combination of any of them, without departure from the scope of the invention, as defined in the annexed claims.

According to a preferred non limiting embodiment of the invention, the base polymer may be polypropylene copolymer, representing about 45% by weight.

Advantageously, the reinforcing component may include glass fiber, representing 5% to 30% by weight. Nevertheless, any other reinforcing component known to the skilled person may be used for the purpose such as, without limitation, carbon, Kevlar or polyethylene fiber, without departure from the scope of the invention as defined in the annexed claims.

In a preferred non limiting configuration, the glass fiber may represent about 10% by weight of the compound.

Suitably, the flame-retardant agent may be of either the halogenated or non halogenated type and may represent 20% to 50% by weight.

In a preferred, non limiting embodiment of the invention, the flame-retardant agent, preferably but without limitation of the brominated type, may represent about 40% by weight.

Nevertheless, it will be readily appreciated that any other flame-retardant agent known to the skilled person may be used for the purpose, whether intumescent or not, halogenated or non halogenated, such as, without limitation, HBCD, TBBP-A, phthalate retardants, azhydrins or polyazhydrins, or antimony-based agents. Its percentage in the blend will change depending on the retardant agent in use, without departure from the scope of the invention, as defined in the annexed claims.

Advantageously, the compound of the invention may include appropriate binders and/or adjuvants, selected among those known to the skilled person.

The compound of the invention may be used for forming articles for use in any industrial field in which polymeric materials are used in high fire hazard applications. Particularly, the compound of the invention may be used to form electric components and accessories, such as cable sheaths, cabins for electric components and the like.

The thermoplastic compound as described hereinbefore may be prepared using a process which includes the following steps.

While the description relates to a compound that is obtained by extrusion, it will be understood that such compound may be prepared using any other process known to the skilled person, e.g. mixing, without departure from the scope as defined in the annexed claims.

A preferred non limiting embodiment of the above compound will be further described below. Nevertheless, it will be understood that the composition, amounts, operating temperatures, processing times and modes may change depending on specific requirements and raw materials in use, without departure from the scope of the invention, as defined in the annexed claims.

In the preparation of the inventive compound, the base polypropylene is first provided, possibly by mixing it with suitable additives and/or adjuvants.

Then, the polypropylene so treated is introduced in a corotating twin-screw extruder, with the speed of the screw set to about 300 - 400 rotations/minute, and is heated to its melting point. Advantageously, the operating temperature during this step may be of 200°C to 230°C, possibly of about 215°C.

Once the propylene is at least partly molten, after two screw segments, the hectorite nanofiller is dispersed therein so that it can be energetically exfoliated and develop all its characteristics. This step may occur at an operating temperature of 150°C to 190°C, and preferably of about 170°C.

Now, after three more screw segments, the reinforcing glass fiber is added, at an operating temperature of 190°C to 210°C, preferably of about 200°C. During this step, the glass fiber starts to orient in the matrix in such a pattern as to accomplish its reinforcing function, thereby imparting optimal mechanical properties to the finished compound.

Finally, in the end section of the extruder, the flame-retardant is added, and fed along four mixing stations. During this step the temperature may be of 150°C to 180°C, and preferably of about 165°C.

Now, once the flame-retardant has been fed and mixed through four mixing stations, the compound is extruded, and then suitably modeled and cooled.

It will be appreciated that, during such steps, appropriate additives and/or adjuvants known to the skilled person may be added in any position, without departure from the scope of the invention, as defined in the annexed claims.

It will be further appreciated that, as an alternative to the above process, the compound may also be extruded from the individual components introduced at the start of the process in a single extrusion step, in which two or more of such components may possibly have been pre-extruded, without departure from the scope of the invention, as defined in the annexed claims.

The compound of the invention has optimal physical and mechanical properties, and especially optimal fire resistance, similar to a thermoset compound, and to such a level as to fully meet the DS4974 standard, which requires a flame from a bumer to be applied to and removed from a specimen five times in controlled and predetermined conditions, and the respective self-extinction times to be checked.

Once the specimen has been submitted to this kind of test, after the last application it has two small embers which extinguish within a few seconds, and therefore largely within the admitted standby time. It exhibits an intact, undamaged structure, does not drip in any application, is not stretched or broken and is especially wholly extinguished, and has no active embers.

The above disclosure clearly shows that the compound of the invention fulfills the intended objects and particularly meets the requirement of having very high fire resistance, similar to thermoset compounds.

Thanks to its particular composition, the compound of the invention can meet the most stringent and restrictive standards.

The compound of this invention is susceptible of a number of changes and variants, within the inventive principle disclosed in the appended claims. All the details thereof may be replaced by other technically equivalent parts, and the materials may vary depending on different needs, without departure from the scope of the invention.

While the compound has been described with particular reference to the accompanying figures, the numerals referred to in the disclosure and claims are only used for the sake of a better intelligibility of the invention and shall not be intended to limit the claimed scope in any manner.

## Claims

1. A thermoplastic compound comprising:
- at least one base polymer,
- at least one flame-retardant agent,
- at least one reinforcing component and
- a nanofiller.

2. Compound as claimed in claim 1, wherein said nanofiller is 2% to 20% by weight, and preferably about 5% by weight.

3. Compound as claimed in claim 1, wherein said nanofiller is of the hectorite or montmorillonite type.

4. Compound as claimed in claim 1, wherein said base polymer includes a polyolefin.

5. Compound as claimed in claim 4, wherein said polyolefin is 20% to 80% by weight.

6. Compound as claimed in claim 5, wherein said polyolefin includes a polypropylene copolymer or homopolymer or a combination thereof.

7. Compound as claimed in claim 6, wherein said polypropylene copolymer is about 45% by weight.

8. Compound as claimed in claim 1, wherein said at least one reinforcing component includes glass fiber.

9. Compound as claimed in claim 8, wherein said glass fiber is 5% to 30% by weight, and preferably about 10% by weight.

10. Compound as claimed in claim 1, wherein said at least one flame-retardant agent is of the halogenated or non halogenated type.

11. Compound as claimed in claim 10, wherein said at least one flame-retardant agent is 20% to 50% by weight, and preferably about 40% by weight.

12. Compound as claimed in claim 10, wherein said at least one halogenated flame-retardant agent is of the brominated type.

13. Compound as claimed in claim 1, **characterized in that** it includes suitable binders and/or adjuvants.

14. A polymeric article **characterized in that** it comprises a thermoplastic compound as claimed in one or more of the preceding claims.

15. The use of the thermoplastic compound as claimed in one or more of the preceding claims.

16. Process for preparing a thermoplastic compound as claimed in one or more of the preceding claims, comprising at least the steps of:
- providing at least one base polymer;
- providing at least one flame-retardant agent;
- providing at least one reinforcing component;
- providing a nanofiller;
- dispersing said nanofiller in said at least one base polymer;
- adding said at least one reinforcing component;
- adding said flame-retardant agent.

17. Process as claimed in claim 16, wherein said base polymer is at least partly molten to a first predetermined operating temperature.

18. Process as claimed in claim 17, wherein said first predetermined operating temperature is 200°C to 230°C and preferably about 215°C.

19. Process as claimed in claim 16, wherein said nanofiller is dispersed at a second predetermined operating temperature.

20. Process as claimed in claim 19, wherein said second predetermined operating temperature is 150°C to 190°C and preferably about 170°C.

21. Process as claimed in claim 16, wherein said reinforcing component is added at a third predetermined operating temperature.

22. Process as claimed in claim 21, wherein said third predetermined operating temperature is 190°C to 210°C and preferably about 200°C.

23. Process as claimed in claim 16, wherein said flame-retardant component is added at a fourth predetermined operating temperature.

24. Process as claimed in claim 23, wherein said fourth predetermined operating temperature is 150°C to 180°C and preferably about 165°C.

25. Process as claimed in any one of claims 16 to 24, wherein the compound is prepared by extrusion.

26. Process as claimed in claim 25, wherein said extrusion is carried out using a corotating twin screw extruder.

27. Process as claimed in any one of claims 16 to 26, wherein said step of dispersing at least one nanofiller occurs after two screw segments.

28. Process as claimed in any one of claims 16 to 27, wherein said step of adding at least one reinforcing component occurs after three screw segments.

29. Process as claimed in claim 28, wherein the compound is extruded after said step of adding at least one flame-retardant agent, after feeding thereof along four screw segments.
